# EUROPÄISCHE PATENTSCHRIFT

(11) **EP 1 889 685 B1**
(45) Veröffentlichungstag und Bekanntmachung des Hinweises auf die Patenterteilung: **31.03.2010**
(21) Anmeldenummer: 07015329.1
(22) Anmeldetag: 04.08.2007
(51) Int. Cl.: B23Q 17/22

(54) **Bearbeitungsmaschine mit einer Überwachungsvorrichtung**
Machining unit with a monitoring device
Machine de traitement avec un dispositif de surveillance

(30) Priorität: 16.08.2006 DE 102006038499
(43) Veröffentlichungstag der Anmeldung: 20.02.2008
(73) Patentinhaber: Grob-Werke GmbH & Co. KG, 87719 Mindelheim (DE)
(72) Erfinder: Martens, Knut, 87719 Mindelheim (DE)
(74) Vertreter: Schulz, Manfred

(56) Entgegenhaltungen:
- EP-A- 1 162 030
- EP-A- 1 495 835
- EP-A- 1 593 456
- DE-U- 1 923 668
- US-A- 6 140 931
- US-B1- 6 409 641

## Beschreibung

Die Erfindung betrifft eine Bearbeitungsmaschine mit einem in einem Spindelkopf einer Arbeitsspindel einsetzbaren Bearbeitungswerkzeug.

Vorgenannte Bearbeitungsmaschinen werden zum Beispiel für die spanabhebende Werkstückbearbeitung, zum Beispiel bei Bearbeitungszentren, Bearbeitungsstationen oder auch in Transferstraßen eingesetzt. Von den vorgenannten Bearbeitungsmaschinen wird eine höchste Bearbeitungsgenauigkeit gefordert.

Aus der Druckschrift US 6,409,641 B1 ist ein solche Bearbeitungsmaschine bekannt.

Die Bearbeitung erfolgt durch Bearbeitungswerkzeuge, die von Arbeitsspindeln in Rotation gesetzt und positioniert werden. Durch die spanabhebende Bearbeitung werden im Arbeitsraum Späne herumgewirbelt, die sich an den verschiedensten Stellen absetzen können.

Beim Wechseln eines Bearbeitungswerkzeuges besteht die Gefahr, daß in den Spindelkopf der Arbeitsspindel, zwischen dem Werkzeugschaft und der Werkzeugaufnahme, Verunreinigungen oder Späne gelangen, die zwar noch ein Spannen des Bearbeitungswerkzeuges in der Arbeitsspindel zulassen, aber die hohe, geforderte Bearbeitungsgenauigkeit negativ beeinflussen.

Es sind Vorschläge unterbreitet worden, die den richtigen Sitz des Bearbeitungswerkzeuges auf einer Plananlagefläche am Spindelkopf überwachen sollen und, bei entsprechenden Maßabweichungen, eine Bearbeitung verhindern. Nun behindern die eingeklemmten Späne oder Verunreinigungen diese Plananlage nicht, trotzdem führen diese Verunreinigungen, wenn sie sich am Spindelkopf und nicht an der Plananlagefläche ablagern, zu einer merklichen Fehlbearbeitung, zum Beispiel durch Unwucht, die im schlechtesten Fall dazu führt, daß das Werkstück zu einem Ausschußteil wird.

Aus dem Stand der Technik ist eine Mess- und Überwachungseinrichtung für die Bearbeitungsmaschinen bekannt, bei der ein druck-, spannung- oder kraftsensibler Sensor in beziehungsweise unter der Plananlagefläche vorgesehen ist. Dieser Sensor zeigt an, ob der zu spannende Gegenstand exakt positioniert ist.

Aus der Druckschrift EP 1 593 456 A1 ist eine Unwuchtüberwachungsvorrichtung für eine CNC-Maschine bekannt, die mit einer Abstandsmessung in Form eines Sensors den Abstand zu einem Maschinenhalter, an dessen der Spindel zugewandten Seite misst. Zusätzlich ist ein magnetischer Sensor zur Überwachung der Winkelstellung der Spindel vorgesehen. Durch diese Ausgestaltung wird festgestellt, ob der Werkzeughalter sich an der richtigen Position befindet oder nicht. Eine Deformation des Werkzeughalters ist durch diese Lösung nicht erkennbar.

Die Druckschrifte EP 1 162 030 A2 zeigt ebenfalls ein Unwuchtdiagnostiksystem, welches sehr kompliziert arbeitet, indem ein Hauptkörper vorgesehen ist, der auf den Bearbeitungstisch beziehungsweise der Bearbeitungsfläche der Werkzeugmaschine anzuordnen ist. Mit einem Referenzwerkzeug wird zunächst dieser Grundkörper ausgerichtet, um dann das eigentliche Werkzeug zu prüfen. Durch die Anordnung des Grundkörpers auf der Bearbeitungsfläche beziehungsweise auf dem Werktisch ist es möglich, dass beim Wechsel des Werkzeuges sich dieser verschiebt. Des Weiteren ist nicht auszuschließen, dass eine Deformation des Spindelkopfes trotzdem vorgesehen ist, auch wenn sich beispielsweise die Werkzeugspitze des Werkzeuges, die lediglich gemessen werden kann, im Toleranzbereich befindet.

Aus der Druckschrift US 6,140 931 ist zudem eine Überwachungsvorrichtung bekannt, die eine luftgelagerte Spindel zu überwachen vermag. Diese dient lediglich der Überwachung der Lage der Spindel, ob sie sich genau in Richtung der Rotationsachse befindet oder nicht. Deformationen aufgrund eines Spannvorganges am Spindelkopf sind durch diese Lösung nicht erkennbar.

Ausgehend von diesem Stand der Technik hat es sich die Erfindung zur Aufgabe gemacht, eine Bearbeitungsmaschine, wie eingangs beschrieben, vorzuschlagen, bei welcher eine möglichst geringe Ausschußquote bei höchster Bearbeitungsgenauigkeit resultiert.

Gelöst wird die eingangs gestellte Aufgabe durch eine Bearbeitungsmaschine nach Anspruch 1.

wie bereits zum Stand der Technik beschrieben, waren Maßnahmen, die die richtige Anlage des Werkzeugschaftes am Spindelkopf überwachen, nicht ausreichend, um die.Gefahr eines eingeklemmten Spanes sicher zu entdecken. Allerdings führt ein solcher eingeklemmter Span zu einer beobachtbaren (zum Beispiel radialen) Deformation des Spindelkopfes. Die Erfindung schlägt nur vor, daß die Form des Spindelkopfes durch eine Überwachungsvorrichtung überwacht wird und dann, falls eine entsprechende Deformation festgestellt wird, einen Bearbeitungseinsatz der Bearbeitungsmaschine unterbleibt und hingegen das Bearbeitungswerkzeug zunächst wieder ausgewechselt wird, die Werkzeugsaufnahme gegebenenfalls gesäubert oder ausgeblasen wird und hernach der Spannvorgang des Bearbeitungswerkzeuges wiederholt wird.

Durch die erfindungsgemäß vorgeschlagene Lösung wird eine drohende Ausschußproduktion aufgrund eines eingespannten aber den Spindelkopf der Arbeitsspindel deformierenden Bearbeitungswerkzeuges erkannt und eine drohende Ausschußproduktion zuverlässig vermieden. Anders als im Stand der Technik wird daher nach der Erfindung die Form beziehungsweise Deformation des Spindelkopfes ermittelt und erkannt und dann, wenn eine solche deformierende Spannung erkannt wurde, natürlich entsprechend behoben. Dies erfolgt durch nochmaliges Herausnehmen des Bearbeitungswerkzeuges und anschließendes Reinigen der Aufnahme- und Anlagefläche. Dies erfolgt vorzugsweise durch Ausbeziehungsweise Abspülen beziehungsweise Aus- beziehungsweise Abblasen.

Entsprechend einer vorteilhaften Weiterbildung der Erfindung ist wenigstens eine Meßvorrichtung an der Umfangsfläche des Spindelkopfes und/oder am Umfang des Bearbeitungswerkzeuges vorgesehen. Aufgrund dieser Anordnung kann sicher erkannt werden, ob aufgrund des Spannvorganges oder aufgrund von Verunreinigungen das Bearbeitungswerkzeug nicht exakt gespannt ist bzw. eine Unwucht oder Deformierung am Spindelkopf vorhanden ist.

Die Erfindung schlägt vor, daß die Meßvorrichtung an der Umfangsfläche entstehende Schwingungen bzw. Deformationen aufgrund einer Umwucht erfaßt bzw. anzeigt und/oder an eine Steuerung, Alarmanlage oder dergleichen, weiterleitet.

Dabei erfolgt die Erfassung der Form des Spindelkopfes durch die Messvorrichtung bevorzugt berührungslos. Auf die aufwendige Anordnung von entsprechenden Schleifkontakten auf dem sich drehenden Spindelkopf kann durch die erfindungsgemäße Variante verzichtet werden.

Neben dem Einsatz einer Messvorrichtung, die die Spindelkopfform berührungslos ermittelt, ist natürlich auch eine Anordnung möglich, bei welcher die Messvorrichtung die Form des Spindelkopfes durch einen mechanischen Kontakt, zum Beispiel mit einer hochgenauen Lehre oder einem Kontaktkopf möglich.

In einer weiteren erfindungsgemäßen Variante ist vorgesehen, dass als Messvorrichtung eine mechanische Messuhr eingesetzt ist, deren Tastkopf auf der Umfangsfläche des Spindelkopfes aufliegt. Zum Beispiel ist die mechanische Messuhr auf einer Positioniereinrichtung angeordnet und wird während der Werkzeugwechselprozedur an der Außenseite der Umfangsfläche positioniert. Dabei ist gefunden worden, dass eine solche mechanische Messuhr bereits zu verwertbaren, ausreichenden Messergebnissen führt, die Messuhr verfügt über ein entsprechendes Gestänge, an deren Ende ein Tastkopf angeordnet ist, der hochsensibel die Form der Spindel aufnimmt. Allgemein ist vorauszusetzen, dass natürlich der Spindelkopf, dessen Form ja zu messen ist, entweder hochgenau bearbeitet ist oder aber in seiner ungespannten Kontur vermessen wird und als Sollvorlage in einem Speicher hinterlegt wird. Günstigerweise wird dabei eine Anordnung vorgesehen, die es erlaubt, dass die Winkellage des Spindelkopfes auslesbar ist. Bei einer solchen Vorgehensweise ist eine entsprechend hochgenaue Bearbeitung und auch Pflege beziehungsweise Vergütung der Umfangsfläche unter Umständen entbehrlich.

In einer erfindungsgemäßen Variante ist zum Beispiel vorgesehen, daß die Messvorrichtung als Dehnmeßstreifen ausgebildet ist und dieser auf dem Spindelkopf angeordnet ist. Ein eingeklemmter Span führt zu einer entsprechenden Deformation des Spindelkopfes beziehungsweise seiner Mantel- oder Umfangsfläche, zum Beispiel zu einer entsprechenden Aufweitung. Ein Dehnmeßstreifen, der zum Beispiel in einem fotolithographischen Bearbeitungsschritt in einer Dünnschichttechnologie auf den Spindelkopf aufgebracht wird, registriert eine entsprechende Dehnung durch eine entsprechende Erhöhung des elektrischen Widerstandes. Dieser geänderte elektrische Widerstand führt zu einem erhöhten Spannungsabfall bei konstantem Stromfluß, der entsprechend auswertbar ist. Dabei sind zum Beispiel entlang des Umfanges des Spindelkopfes eine Mehrzahl von Dehnmeßstreifen beabstandet zueinander vorgesehen. Ein entsprechendes Messsignal wird zum Beispiel drahtlos übermittelt und dann ausgewertet.

Neben dem beschriebenen Einsatz von mechanischen Lehren oder elektrischen Messvorrichtungen, zum Beispiel mit Hilfes des Dehnmeßstreifens, sind natürlich auch Anordnungen möglich, bei welchen die Messvorrichtung einen induktiven oder kapazitiven Sensor besitzt. Mit Hilfe von induktiven oder kapazitiven Sensoren ist es insbesondere möglich auch ein berührungsloses Messen und Erkennen von Deformationen beziehungsweise Veränderungen am Spindelkopf und/oder am Bearbeitungswerkzeug zu messen und zu erkennen. Die induktiven beziehungsweise kapazitiven Sensoren sind bezüglich der Genauigkeit äußerst exakt und erkennen selbst kleinste Veränderungen beziehungsweise Deformationen.

Des Weiteren sind auch akustische oder optisch wirkende Messvorrichtungen möglich. Zum Beispiel kann eine in diesem Zusammenhang zum berührungslosen Messen ausgebildete Messvorrichtung, die von dem Spindelkopf reflektierten Wellen (seien es Ultraschallwellen oder auch Lichtstrahlen) ausgenützt werden, um eine entsprechende Deformation zu erkennen.

Des Weiteren umfaßt die Überwachungsvorrichtung erfindungsgemäß eine Bewertungsvorrichtung, die gegebenenfalls als Teil der Maschinensteuerung der Bearbeitungsmaschine ausgebildet ist und die Bewertungsvorrichtung die durch die Messvorrichtung bestimmte Spindelkopfform bewertet.

Es ist durchaus möglich, daß geringfügigste Deformationen des Spindelkopfel tolerabel sind, da diese Deformationen noch nicht zu einer inakzeptablen Bearbeitungsqualität führen. Das bedeutet, daß innerhalb eines Akzeptanzintervalles die Spindelkopfform, auch wenn diese von der Idealform abweicht, akzeptiert wird und eine Bearbeitung des Werkstückes durch die Bearbeitungsmaschine nicht unterbrochen wird. Daher weist die Überwachungsvorrichtung geschickterweise zusätzlich eine Bewertungsvorrichtung auf, aufgrund deren Bewertung dann entweder eine Bearbeitung erfolgt oder nicht.

Bevorzugterweise wird die Erfindung bei einer spanabhebenden Bearbeitungsmaschine beziehungsweise bei Bearbeitungsmaschinen, die spanabhebende Bearbeitungswerkzeuge einsetzen, verwendet. Gerade bei diesen Bearbeitungsmaschinen taucht zum einen das genannte Problem verstärkt auf, weil diese gattungsgemäß entsprechende störende Späne produziert. Zum anderen sind gerade bei diesen spanabhebenden Bearbeitungsmaschinen die Folgen von entsprechend ungenau gespannten Bearbeitungswerkzeugen erheblich, die dann zu einer Ausschußproduktion führen können. Dabei ist die Erfindung aber in keinster Weise auf spanabhebende Bearbeitungsmaschinen beschränkt, es bestehen auch durchaus andere Bearbeitungsmaschinen, zum Beispiel Montagemaschinen oder auch Messvorrichtung beziehungsweise Prüfmaschinen als Bearbeitungsmaschinen, bei welchen entsprechende Prüfwerkzeuge in entsprechende Spindelköpfe eingesetzt werden und auch einer entsprechend hohen Genauigkeit bedürfen. In diesem Zusammenhang ist der Begriff einer Arbeitsspindel beziehungsweise eines Spindelkopfes in keinster Weise auf einen rotierenden Antrieb beschränkt zu verstehen, sondern beschreibt vielmehr die Möglichkeit, daß mit Hilfe der Arbeitsspindel das Bearbeitungswerkzeug, welches sehr beliebig ausgebildet sein kann, wie beschrieben, an einer beliebigen Position bezüglich des Werkstückes zu positionieren ist.

Des Weiteren umfaßt die Erfindung nicht nur eine Bearbeitungsmaschine wie beschrieben, sondern die erfindungsgemäße Aufgabe wird auch durch ein Verfahren zum Betreiben einer Bearbeitungsmaschine gelöst, bei welchem zunächst ein Bearbeitungswerkzeug in den Spindelkopf eingesetzt und dort gespannt wird, dann die Form des Spindelkopfes durch die Messvorrichtung ermittelt wird, die ermittelte Form durch eine Bewertungsvorrichtung bewertet wird und, falls die Form innerhalb eine Akzeptanzintervalls liegt, die Bearbeitung des Werkstückes durch das Bearbeitungswerkzeug erfolgt oder, falls die Form außerhalb des Akzeptanzintervalls liegt, das Bearbeitungswerkzeug aus dem Spindelkopf entnommen und zumindest die Bearbeitungswerkzeugaufnahme im Spindelkopf gesäubert, insbesondere ausgeblasen wird. Durch das erfindungsgemäß vorgeschlagene Verfahren wird ein Überprüfungsschritt durchgeführt, der zum einen in einem Messschritt die Form des Spindelkopfes bestimmt und dann in einem Bewertungsschritt abprüft, ob die ermittelte Form akzeptabel, also innerhalb eines gegebenenfalls frei wählbaren Akzeptanzintervalles oder außerhalb dieses Akzeptanzintervalles liegt. Liegt die ermittelte Form außerhalb des Akzeptanzintervalles riskiert ein weiterer Einsatz der Bearbeitungsmaschine eine Fehlbearbeitung und es wird dann vorgesehen, daß das Bearbeitungswerkzeug wieder aus der Bearbeitungswerkzeugaufnahme des Spindelkopfes entnommen wird und diese dann gesäubert wird. Bei dem Säuberungsschritt ist dann der Span oder sonstige Verunreinigungen zu entfernen, geschickterweise wird die Werkzeugaufnahme dabei ausgeblasen oder gegebenenfalls auch mit Kühl- beziehungsweise Spülflüssigkeit gespült. Hernach wird das Einsetzen des Bearbeitungswerkzeuges in den Spindelkopf sowie der Mess- beziehungsweise Bewertungsschritt nochmals wiederholt und dann die Bearbeitung ausgeführt, wenn die Form akzeptabel ist. Sollte sich dann immer noch nicht eine akzeptable Form ermitteln lassen, kann dann steuerungstechnisch eine weitere Spülung vorgesehen werden oder eine höherstehende Fehlermeldung ausgegeben werden, die zu einer entsprechenden Überprüfung der Bearbeitungsmaschine führt. Es resultiert ein sehr hoher Schutz vor Fehlbearbeitungen und vermeidbaren Ausschuß durch den erfindungsgemäßen Vorschlag.

In einer erfindungsgemäßen Variante wird vorgesehen, dass die Form des Spindelkopfes während einer Rotation, insbesondere wärhend des Hochfahrens der Rotation für anschließende Bearbeitungszwecke ermittelt wird. Eine solche Vorgehensweise bietet sich an, wenn zum Beispiel eine stationär angeordnete Messvorrichtung, zum Beispiel mechanisch, elektrisch, optisch wie beschrieben Verwendung findet. Bei anderen Messvorrichtungen ist es aber auch schon möglich, die Form des Spannkopfes beim Spannen des Werkzeuges abzuprüfen und so entsprechend Zeit zu sparen. Eine solche Variante stellt zum Beispiel die Anordnung mit dem Dehnmeßstreifen dar. Geschickterweise wird dabei die Rotation des Spindelkopfes nach dem Einsetzen des Werkzeuges für das Hochfahren der Spindel verwendet, wodurch jede Position der Umfangsfläche an dem Sensor vorbeigeführt wird und die Umfangsfläche entsprechend auf Deformationen ausgewertet werden kann. Gegebenenfalls wird eine Phase mit langsamer Drehgeschwindigkeit im eigentlichen Hochfahren für Bearbeitungszwecke vorgeschaltet, um der Messvorrichtung ausreichend Zeit für die Messungen zu geben.

Wesentlich bei der Erfindung ist, nicht die exakte Form des Spindelkopfes zu ermitteln, sondern festzustellen, ob ein Span vor sonstigen Verunreinigungen derart eingespannt sind, damit dies nicht zu Fehlbearbeitungen führen kann.

Es ist klar, daß das vorbeschriebene Verfahren nicht nur bei spanabhebenden Bearbeitungswerkzeugen Verwendung finden kann, sondern natürlich genauso bei Bearbeitungsmaschinen die eine Montagearbeit ausführen oder bei Bearbeitungsmaschinen, die als Prüfmaschinen realisiert sind, einsetzbar sind. Gerade Prüfmaschinen, die entsprechende Kontrollfunktionen aufweisen, bedürfen ebenfalls einer sehr hohen Genauigkeit der Lage des Prüfwerkzeuges als Bearbeitungswerkzeug und auch hier leistet die Erfindung hervorragende Dienste.

In der einzigen Zeichnung ist die erfindungsgemäße Bearbeitungsmaschine in einem Schnitt im Bereich des Spindelkopfes der Arbeitsspindel schematisch gezeigt.

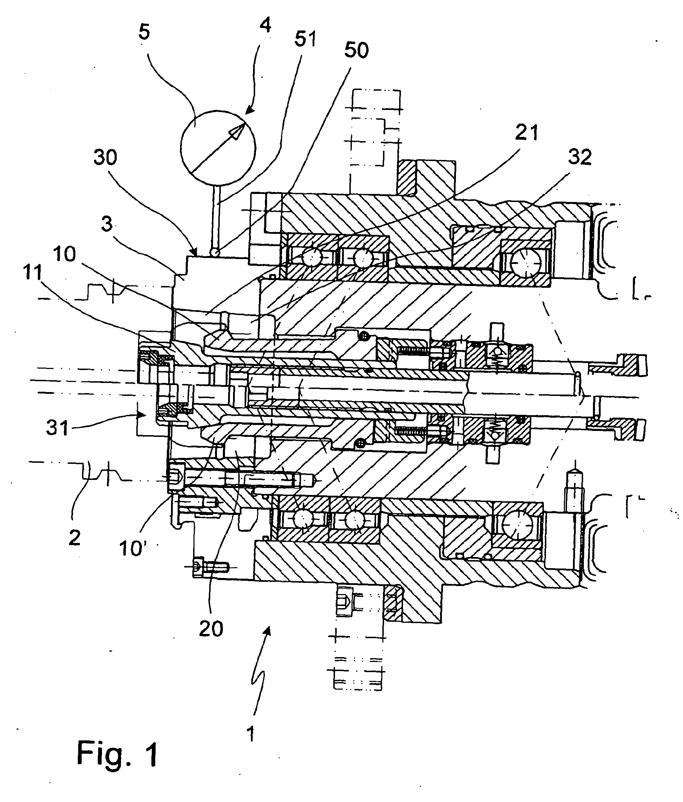

Fig. 1 zeigt den vorderen, einem nicht dargestellten Werkstück zugewandten Bereich der Arbeitsspindel 1. An ihrem vorderen Ende trägt die Arbeitsspindel 1 auf ihrem Spindelkopf 3 das Bearbeitungswerkzeug 2. Es sind sogenannte HSK-Werkzeug (Hohlschaftkegel-Werkzeuge) bekannt, die von einer Spannklaue 10, 10' gehalten sind. In der gespannten Position der Spannklaue 10' ist der Werkzeugschaft 20 in der Bearbeitungswerkzeugaufnahme 31 des Spindelkopfes 3 festgehalten.

Die Werkzeugschaftaußenfläche 21 liegt möglichst vollflächig an der Aufnahmeinnenfläche 32 des Spindelkopfes an. Ein in diesem Bereich liegender Span führt zu einer meßbaren Deformation des Spindelkopfes 3, insbesondere zu dessen Mantel- beziehungsweise Umfangsfläche 30.

Eine Messvorrichtung 5 besitzt einen Messkopf 50 oder Sensor 50, der die Form des Spindelkopfes 3 beziehungsweise die Oberflächenkontur der Umfangsfläche 30, was hiermit gleichwirkend ist, überwacht. Der Messkopf 50 beziehungsweise der Sensor 50 besitzt eine Messleitung 51, um die Messvorrichtung 5, die Teil der Überwachungsvorrichtung 4 ist, mit dem Messkopf/Sensor 50 zu verbinden.

Anstelle der abgebildeten Messvorrichtung 5 ist es aber auch möglich, eine mechanisch funktionierende Messuhr einzusetzen, die über ein mechanisches Gestänge verfügt, deren vordere Spitze als Messkopf 50 ausgebildet ist und entsprechende Deformationen der Umfangsfläche 30 auffasst und anzeigt beziehungsweise einer Bewertungseinheit zur Verfügung stellt. Das Abtasten erfolgt dabei nur auf einem Umfangsring oder vollflächig auf der Umfangsfläche.

Wird nun ein Bearbeitungswerkzeug 2 in die Bearbeitungswerkzeugaufnahme 31 eingesetzt, so ist die Spannstange 11 nach vorne geschoben, die Spannklaue 10 weicht radial zurück gegenüber dem nach innen vorstehenden Bund des Hohlschaftkegels des Bearbeitungswerkzeuges 2. Wird dann die Spannstange 11' nach rechts bewegt, so hintergreift die Spannklaue 10' den Bund am Bearbeitungswerkzeug und preßt beziehungsweise zieht die Werkzeugschaftaußenfläche 21 auf die Aufnahmeinnenfläche 32. Die hier auftreten Kräfte sind erheblich und vermögen, wenn eine entsprechende Verunreinigung, ein Span oder dergleichen im Zwischenraum zwischen dem Werkzeugschaft 20 und der Bearbeitungswerkzeugaufnahme 31 ist, den Spindelkopf meßbar zu verformen. Diese Verformung wird durch die Überwachungsvorrichtung 4 überwacht, die Messvorrichtung 5 ermittelt die entsprechende Deformation, eine nicht weiter dargestellte Bewertungseinheit prüft, ob die aufgenommene Form innerhalb eines Akzeptanzintervalles ist oder nicht.

## Patentansprüche

1. Bearbeitungsmachine mit einer Arbeitsspindel (1), einem an deren vorderen Ende angeordneten Spindelkopf (3) und einem als Hohlschaftkegelwerkzeug ausgebildeten Bearbeitungswerkzeug (2), wobei der Werkzeugschaft (2a) des Bearbeitungswerkzeugs (2) in der gespannten Position durch eine Spannklaue (10, 10') in einer Bearbeitungswerkzeugaufnahme (31) des Spindelkopfes (3) festgehalten ist, **dadurch gekennzeichnet, dass** eine Überwachungsvorrichtung (4) vorgesehen ist, die eine Messvorrichtung (5) umfasst, die an der Umfangsfläche (30) des Spindelkopfes (3) vorgesehen ist, wobei die Messvorrichtung (5), die einen Messkopf (50) bzw. einen Sensor (50) besitzt, so angeordnet ist, dass sie eine durch einen Span im Bereich zwischen Werkzeugaussenfläche (21) und der Aufnahmeinnenfläche (32) verursachte Deformation der Oberflächenkontur der Umfangsfläche (30) des Spindelkopfes (3) erfasst, bzw. anzeigt.

2. Bearbeitungsmaschine nach Anspruch 1, **dadurch gekennzeichnet, dass** die Meßvorrichtung (5) an der Mantelbeziehungsweise Umfangsfläche (30) entstehende Schwingungen bzw. die Deformationen aufgrund einer Unwucht oder Verunreinigung erfaßt bzw. anzeigt und diese an eine Steuerung, Alarmanlage oder dergleichen weiterleitet.

3. Bearbeitungsmaschine nach einem der vorhergehenden Ansprüche, **dadurch gekennzeichnet, dass** die Messvorrichtung (5) die Form des Spindelkopfes berührungslos ermittelt.

4. Bearbeitungsmaschine nach einem der vorhergehenden Ansprüche, **dadurch gekennzeichnet, dass** die Überwachungsvorrichtung (4) sowohl den Spindelkopf (3) als auch das Bearbeitungswerkzeug überwacht.

5. Bearbeitungsmaschine nach einem der vorhergehenden Ansprüche, **dadurch gekennzeichnet, dass** als Messvorrichtung eine mechanische Messuhr vorgesehen ist, deren Tastkopf (50) auf der Umfangsfläche (30) des Spindelkopfes (3) aufliegt.

6. Bearbeitungsmaschine nach einem der vorhergehenden Ansprüche, **dadurch gekennzeichnet, dass** die Messvorrichtung (5) einen induktiven oder kapazitiven Sensor (50) besitzt und/oder die Messvorrichtung (5) als Dehnmeßstreifen ausgebildet ist und der Dehnmeßstreifen auf dem Spindelkopf (3) angeordnet ist.

7. Bearbeitungsmaschine nach einem der vorhergehenden Ansprüche, **gekennzeichnet durch** eine mechanisierte, elektrische, elektromechanische, akustische oder optisch wirkende Messvorrichtung (5).

8. Bearbeitungsmaschine nach einem der vorhergehenden Ansprüche, **dadurch gekennzeichnet, dass** die Überwachungsvorrichtung (4) eine Bewertungsvorrichtung, gegebenenfalls als Teil der Maschinensteuerung der Bearbeitungsmaschine umfasst und die Bewertungsvorrichtung die durch die Messvorrichtung (5) bestimmte Spindelkopfform bewertet.

9. Bearbeitungsmaschine nach einem der vorhergehenden Ansprüche, **gekennzeichnet durch** eine spanabhebende Bearbeitung bzw. ein spanabhebendes Bearbeitungswerkzeug (2).

10. Verfahren zum Betreiben einer Bearbeitungsmaschine nach Anspruch 1, wobei zunächst ein Bearbeitungswerkzeug in den Spindelkopf eingesetzt und dort gespannt wird, dann die Form des Spindelkopfes durch die Messvorrichtung ermittelt wird, die ermittelte Form durch eine Bewertungsvorrichtung bewertet wird, **dadurch gekennzeichnet, dass**, falls die Form des Spindelkopfes innerhalb eines Akzeptanzintervalls liegt, die Bearbeitung des Werkstückes durch das Bearbeitungswerkzeug erfolgt, oder, falls die Form außerhalb des Akzeptanzintervalls liegt, das Bearbeitungswerkzeug aus dem Spindelkopf entnommen und zumindest die Bearbeitungswerkzeugaufnahme im Spindelkopf gesäubert, insbesondere ausgeblasen wird und/oder der Spindelkopf insgesamt gesäubert, insbesondere aus- beziehungsweise abgeblasen wird.

11. Verfahren nach Anspruch 10, **dadurch gekennzeichnet, dass** die Form des Spindelkopfes während einer Rotation, insbesondere während des Hochfahrens der Rotation, für anschließende Bearbeitungszwecke ermittelt wird.

## Claims

1. Processing machine with a working spindle (1), a spindle head (3) provided at its front end, and a machining tool (2) designed as drilled shank cone tool, wherein the tool shank (20) of the machining tool (2) is held fixedly in a clamped position by a clamping claw (10, 10') in a machining tool receiver (31) of the spindle head (3), **characterised in that** a monitoring device (4) is provided comprising a measuring device (5) which is provided on the circumferential surface (30) of the spindle head (3), wherein the measuring device (5) having a measuring head (50) or a sensor (50) is arranged in such a way that it collects and displays, respectively, a deformation of the surface edges of the circumferential surface (30) of the spindle head (3) caused by a chip in the zone between the exterior surface (21) of the tool and the interior surface (32) of the receiver.

2. Processing machine according to claim 1, **characterised in that** the measuring device (5) collects and displays, respectively, vibrations or the deformations generated on the surface area or the circumferential surface (30) because of unbalanced state or soiling, and transfers these to a control, alarm or the like.

3. Processing machine according to one of the preceding claims, **characterised in that** the measuring device (5) defines the shape of the spindle head contactless.

4. Processing machine according to one of the preceding claims, **characterised in that** the monitoring device (4) monitors the spindle head (3) as well as the machining tool.

5. Processing machine according to one of the preceding claims, **characterised in that** as measuring device a mechanic dial gauge is provided the probe (50) of which is supported on the circumferential surface (30) of the spindle head (3).

6. Processing machine according to one of the preceding claims, **characterised in that** the measuring device (5) has an inductive or capacitive sensor (50), and/or the measuring device (5) is designed as resistance strain gauge, and the resistance strain gauge is arranged on the spindle head (3).

7. Processing machine according to one of the preceding claims, **characterised by** a mechanised, electrically, electro-mechanically, acoustically or optically acting measuring device (5).

8. Processing machine according to one of the preceding claims, **characterised in that** the monitoring device (4) comprises an evaluating device, if necessary as part of the machine control of the processing machine, and the evaluating device evaluates the shape of the spindle head determined by the measuring device (5).

9. Processing machine according to one of the preceding claims, **characterised by** a metal-removing machining or a metal-removing machining tool (2).

10. Method for operating a processing machine according to claim 1, wherein, first of all, a machining tool is set in the spindle head and is clamped there, then the shape of the spindle head is determined by the measuring device, the determined shape is evaluated by an evaluating device, **characterised in that**, in case that the shape of the spindle head is within an acceptance interval, the machining of the work piece is carried by the machining tool, or, in case that the shape is outside the acceptance interval, the machining tool is removed from the spindle head, and at least the machining tool receiver in the spindle head is cleaned, in particular is blown out, and/or the spindle head is cleaned altogether, in particular is blown out or blown off.

11. Method according to claim 10, **characterised in that** the shape of the spindle head during a rotation, in particular during running-up of the rotation is determined for subsequent machining purposes.

## Revendications

1. Machine d'usinage comportant une broche (1) portant à son extrémité avant un mandrin (3) et un outil d'usinage (2) à cône creux dont la tige (20) est, en position serrée, maintenue à l'intérieur d'un logement d'outil (31) du mandrin (3) par une pince de serrage (10,10'), **caractérisée en ce qu'**un dispositif de contrôle (4) est prévu, comportant un dispositif de mesure (5) situé sur la surface extérieure (30) du mandrin (3) et dont la tête de mesure (50) ou le capteur (50) est situé(e) de façon à ce qu'il détecte et signale une quelconque déformation de la surface extérieure (30) du mandrin (3) provoquée par un copeau inclus entre la surface extérieure (21) de l'outil d'usinage et la surface intérieure (32) du récepteur du mandrin (3).

2. Machine d'usinage selon la revendication 1, **caractérisée en ce que** le dispositif de mesure (5) détecte des oscillations ou déformations de la surface extérieure (30) provoquées par un déséquilibrage ou une présence d'un corps étranger et les signale à un système de contrôle ou un système similaire.

3. Machine d'usinage selon une des revendications précédentes, **caractérisée en ce que** le dispositif de mesure (5) saisit les contours du mandrin sans contact.

4. Machine d'usinage selon une des revendications précédentes, **caractérisée en ce que** le dispositif de contrôle (4) contrôle aussi bien le mandrin (3) que l'outil d'usinage.

5. Machine d'usinage selon une des revendications précédentes, **caractérisée en ce que** le dispositif de mesure est un comparateur mécanique dont la pointe (50) repose sur la surface extérieure (30) du mandrin (3).

6. Machine d'usinage selon une des revendications précédentes, **caractérisée en ce que** le dispositif de mesure (5) comporte un capteur inductif ou capacitif (50) et/ou **en ce que** le dispositif de mesure (5) est un extensomètre placé sur le mandrin (3).

7. Machine d'usinage selon une des revendications précédentes, **caractérisée par** un dispositif de mesure (5) par moyen mécanique, électrique, électromécanique, acoustique ou optique.

8. Machine d'usinage selon une des revendications précédentes, **caractérisée en ce que** le dispositif de contrôle (4) comporte un dispositif de jugement faisant, le cas échéant, partie du système de contrôle de la machine d'usinage et **en ce que** ce dispositif d'évaluation évalue la forme du mandrin mesurée par le dispositif de mesure (5).

9. Machine d'usinage selon une des revendications précédentes, **caractérisée par** un usinage générant des copeaux ou par l'utilisation d'un outil d'usinage (2) générant des copeaux.

10. Procédé d'utilisation d'une machine d'usinage selon la revendication 1 débutant par la mise en place puis le serrage d'un outil d'usinage dans le mandrin, suivie de la saisie de la forme du mandrin par le dispositif de mesure et son évaluation par le dispositif d'évaluation, procédé **caractérisé** dans le cas où la forme du mandrin est évaluée être à l'intérieur d'un intervalle spécifié par le démarrage de l'usinage de la pièce par l'outil d'usinage, ou, dans le cas contraire, d'une forme évaluée être en dehors de l'intervalle spécifié, par l'enlèvement de l'outil d'usinage du mandrin et du nettoyage au moins du logement dans le mandrin et en particulier par moyen de souffle d'air sous pression et/ou un nettoyage global du mandrin et en particulier au moyen de souffle d'air sous pression appliqué à l'intérieur et à l'extérieur du mandrin.

11. Procédé selon la revendication 10, **caractérisé en ce que** la forme du mandrin est saisie lors d'une rotation du mandrin et en particulier lors de l'accélération de la rotation avant le démarrage de l'usinage.
